# EUROPÄISCHE PATENTSCHRIFT

(11) **EP 1 402 766 B1**
(45) Veröffentlichungstag und Bekanntmachung des Hinweises auf die Patenterteilung: **07.06.2006**
(21) Anmeldenummer: 03029506.7
(22) Anmeldetag: 30.07.1996
(51) Int. Cl.: A01C 15/00, A01M 7/00

(54) **Verfahren zum Steuern und/oder Regeln von landwirtschaftlichen Bearbeitungs-und/oder Verteilmaschinen**
Method for controlling and/or regulating agricultural processing and/or distributing machines
Procédé de commande et de régulation de machines agricoles de travail et/ou de distribution

(30) Priorität: 06.09.1995 DE 19532870; 31.01.1996 DE 19603426
(43) Veröffentlichungstag der Anmeldung: 31.03.2004
(62) Teilanmeldung aus: 01128098.9
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Kemper, Martin, 49205 Hasbergen (DE); Marquering, Johannes, Dr., 49176 Borgloh (DE)

(56) Entgegenhaltungen:
- EP-A- 0 181 308
- EP-A- 0 266 527
- EP-A- 0 570 792
- EP-A- 0 578 988
- EP-A- 0 726 024
- EP-A- 0 730 819
- WO-A-95/04450
- DE-A- 4 342 171
- DE-A- 4 423 083
- US-A- 5 220 876

## Beschreibung

Die Erfindung betrifft ein Verfahren gemäß des Oberbegriffes des Patentanspruches (siehe z.B. EP-A-5 78988).

In der Landwirtschaft sind verschiedene Verfahren zum Steuern und/oder Regeln von landwirtschaftlichen Bearbeitungs- und/oder Verteilmaschinen bekannt, die sich zur momentanen Positionsermittlung der Maschine auf dem Feld auf das sogenannte DGPS (Differential Global Position System) stützen. Bei diesem Verfahren sind Rechner vorgesehen, in welchem maschinenspezifische Daten zur Erstellung der Maschine je Standort und Fläche eingespeichert sind.

Der Erfindung liegt die Aufgabe zugrunde, eine möglichst genaue teilschlagspezifische Bewirtschaftung bei der Ausbringung von Saatgut, Düngemitteln und Pflanzenschutzmitteln auch nach Ausbringunterbrechungen zu erreichen.

Diese Aufgabe wird erfindungsgemäß durch die kennzeichnenden Maßnahmen des Anspruches gelöst. Somit wird also die Arbeit oder das Ausbringen von Material automatisch an der richtigen Stelle, an der die Arbeit unterbrochen worden ist, wieder fortgesetzt, ohne dass Doppel- oder Fehlbearbeitung entsteht.

Weitere Einzelheiten der Erfindung sind den übrigen Unteransprüchen, der Beispielsbeschreibung und den Zeichnungen zu entnehmen. Hierbei zeigen
- Fig. 1: den Ausschnitt einer Bodenkarte eines Feldes,
- Fig. 2: eine an einen Ackerschlepper angebaute als Schleuderdüngerstreuer ausgebildete Verteilmaschine in der Seitenansicht und in Prinzipdarstellung,
- Fig. 3: ein Standortbestimmungssystem in Prinzipdarstellung und
- Fig. 4: eine weitere Bodenkarte, auf welcher der optimale Fahrweg zur Entnahme einer Bodenprobe dargestellt ist.

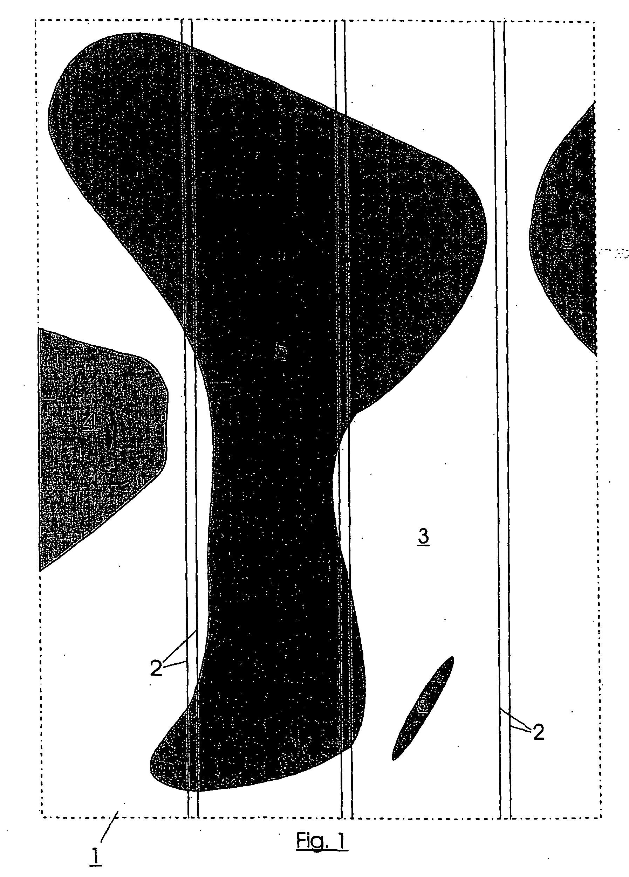

Zur bedarfsgerechten Bewirtschaftung von Flächen werden zunächst in eine Bodenkarte die spezifischen Beschaffenheiten, wie beispielsweise Nährstoffversorgung, Bodenfestigkeit und/oder Bodenart etc. eingetragen. Hierdurch kann sich beispielsweise eine Karte 1 ergeben, wie sie in Fig. 1 ausschnittsweise dargestellt ist. Mit den durchzogenen Linien sind die Fahrgassen 2 dargestellt, in welchen Abständen sie angelegt und in welchen Abständen das Feld durchfahren werden soll, um so ein genaues Anschlussfahren zu gewährleisten.

Des Weiteren sind verschiedene Teilflächen unterschiedlich schattiert dargestellt. Die weiß unterlegte Fläche 3 stellt die überwiegende Beschaffenheit des Feldes, beispielsweise die Basisbeschaffenheit dieses Feldes dar.

Die hell schattierte Fläche 4 stellt einen Bereich mit einer gegenüber der Basisfläche 3.niedrigeren Nährstoffversorgung dar, während die dunkler schattierten Flächen 5 eine höhere Nährstoffversorgung als die Basisfläche 3 aufweisen. Die in gleicher weise schattierten Flächen weisen also eine ähnliche oder gleiche Nährstoffversorgung auf.

Das gemäß Fig. 1 im Teilbereich dargestellte Feld ist in einem Rechner 6 abgespeichert, wobei die Lage der Fahrgassen 2 und die Teilflächen 3, 4, 5 standort- bzw. koordinatenmäßig abgespeichert sind.

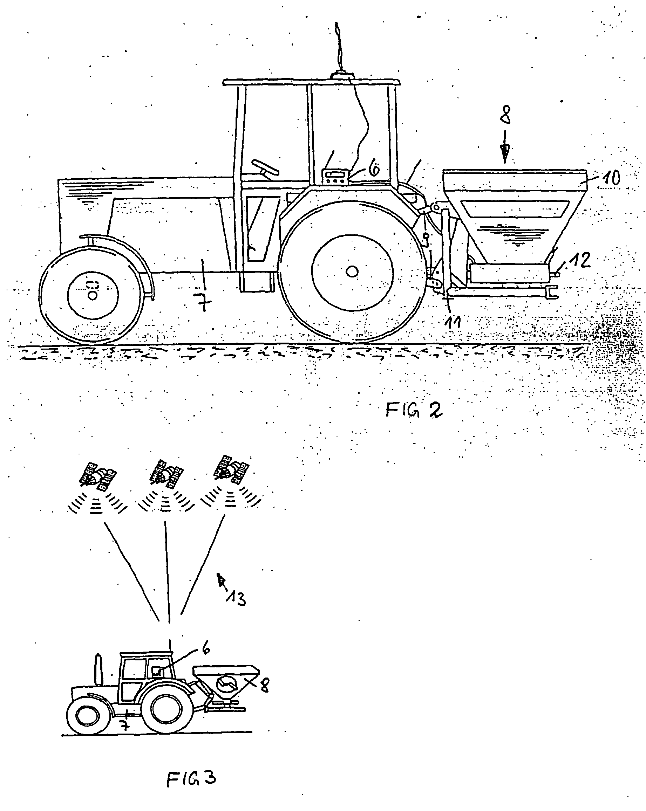

Um auf dem Feld Mineraldünger zu verteilen, ist ein Ackerschlepper 7 mit einem Zentrifugaldüngerstreuer 8 gemäß Fig. 2 vorgesehen. An dem Ackerschlepper 7 ist über die Dreipunktkupplung 9 der Zentrifugaldüngerstreuer 8 angebaut. Der Zentrifugaldüngerstreuer 8 weist den Vorratsbehälter 10 und den Rahmen 11 auf. Unterhalb des Vorratsbehälters 10 sind die Schleuderscheiben 12 angeordnet, denen das sich im Vorratsbehälter 10 befindliche Material über eine Dosiereinrichtung zugeführt wird. Die jeder Schleuderscheibe 12 zugeordnete Dosiereinrichtung ist unabhängig von der anderen einstellbar.

Auf dem Ackerschlepper 7 ist der Bordrechner 6 angeordnet. In dieser als Bordrechner 6 ausgebildeten Rechnerstation sind über geeignete Eingabevorrichtungen, wie beispielsweise eine Tastatur, eine Chipkarte, welche über einen auf dem Hof vorhandenen Rechner mit entsprechenden Daten versorgt ist, die Daten über das Feld sowie der Verteilmaschine einzugeben und zu speichern. So sind in dieser Rechnerstation die Bodenkarte, die Verteilung des Materials und die Einstellung des Düngerstreuers eingegeben, wie sie von dem Rechner auf dem Hof entsprechend eines Programms berechnet worden sind.

Des Weiteren ist die Rechnerstation 2 mit einem GPS-System oder einem DGPS-System (Digital Global Position System) 13 ausgestattet. Dieses System 13 arbeitet sattelitengestützt, so dass der aktuelle Standort des Schleppers 7 bzw. der Verteilmaschine 7 auf dem Acker entsprechend genau zu bestimmen ist. Anhand dieser standortermittelten Daten wird die Verteilmaschine 8 entsprechend der in dem Rechner eingegebenen Bodenkarte 1 und Daten gesteuert.

Das in dem Rechner 6 abgespeicherte Programm derart ist ausgelegt, dass sich das Arbeitsgerät 8 automatisch wieder einschaltet, wenn die Fahrgasse oder die geplante Fahrspur für eine Arbeitsunterbrechung zwecks Nachfüllen des Vorratsbehälters verlassen wird und für die Weiterarbeit wieder angefahren wird. Hierdurch wird automatisch ein nahtloses Verteilen des Düngers erreicht. Um zu verhindern, dass innerhalb einer Arbeitsbahn der Vorratsbehälter 10 nachgefüllt werden muss, ist das Programm in dem Bordcomputer 6 derart ausgelegt, dass der Bordcomputer 6 aufgrund der Planung der Materialverteilung vorausberechnet, an welcher Stelle es sinnvoll ist, den Vorratsbehälter 10 wieder aufzufüllen. Somit werden unnötige Leerfahrten und Doppelfahrten innerhalb des Feldes vermieden.

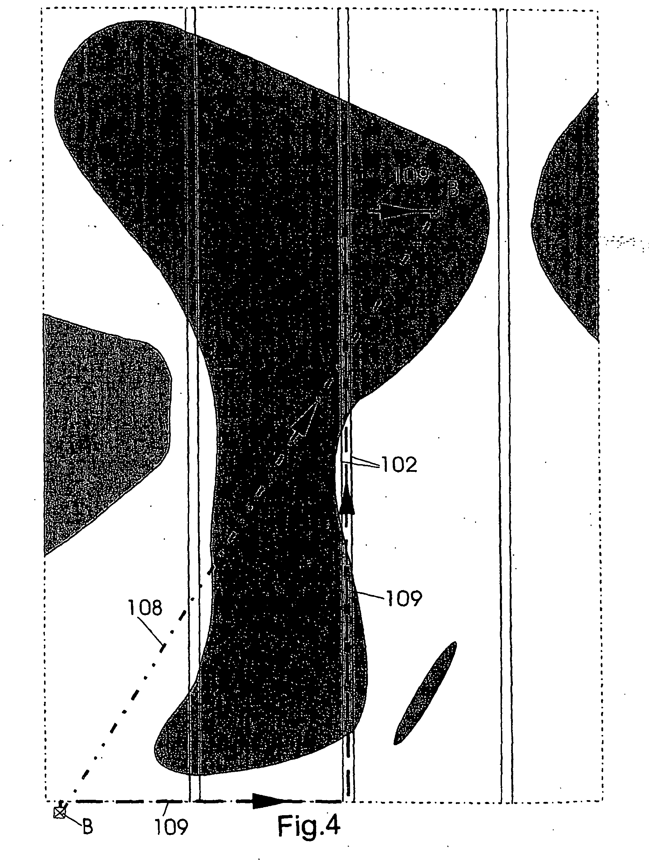

Die Fig. 4 zeigt eine Karte, bei welcher beispielsweise an der Stelle A eine Bodenprobe entnommen werden soll. Mittels einer Peileinrichtung kann auf kürzestem Wege von dem Ausgangspunkt B zu der Stelle A gefahren werden, wie dieses durch die Linie 108 dargestellt ist. Dieses hat jedoch Nachteile, wenn bereits auf dem Feld Nutzsaatgut ausgesät worden ist. Dieses Verfahren wird man anwenden, wenn der Acker abgeerntet ist oder auf einer Wiese, wenn auf dem Bewuchs keine Rücksicht zu nehmen ist.

Wenn jedoch das Feld eingesät ist und Fahrgassen 102 angelegt sind, wird man entlang der Strecke 109 fahren unter Benutzung der Fahrgassen, um zu dem Punkt A zu gelangen, um dort eine Probe entnehmen zu können. Hierzu kann dann beispielsweise vorgesehen sein, dass in dem Rechner eine Karte des Feldes mit den angelegten Fahrgassen 102 abgespeichert ist, dass der Rechner den kürzesten Weg unter Benutzung der Fahrgassen 102 zu dem vorbestimmten Punkt A zur Probenentnahme auf dem Feld ermittelt, insbesondere errechnet, anzeigt und/oder ausdruckt. Hierzu sind dann an dem Rechner ein entsprechendes Display oder andere geeignete Anzeigevorrichtungen vorgesehen.

## Patentansprüche

1. Verfahren zum Steuern und/oder Regeln von landwirtschaftlichen Bearbeitungs- und/oder Verteilmaschinen, bei dem in einem Rechner maschinenspezifische Daten zur Einstellung der Maschine je Standort und Fläche eingespeichert sind, wobei anhand der in dem Rechner (6) eingegebenen Daten die Bearbeitungs- und/oder Verteilmaschine gesteuert und/oder geregelt wird, wobei ein Positionsgeber (13) zum Erzeugen von Feldkoordinatensignalen zur Angabe der relativen Position des Fahrzeuges (7,8) auf dem Feld vorgesehen ist, wobei in Abhängigkeit der aktuellen Position die Steuerung und/oder Regelung erfolgt, **dadurch gekennzeichnet, dass** sich das Arbeitsgerät automatisch aus- und wieder einschaltet, wenn die Fahrgasse oder die geplante Fahrspur für eine Arbeitsunterbrechung zwecks Nachfüllen des Vorratsbehälters verlassen wird und für die Weiterarbeit wieder angefahren wird.

## Claims

1. Method for controlling and/or regulating agricultural cultivating and/or distributing machines, where machine-specific data for the adjustment of the machine as regards location and surface is stored in a computer, wherein the cultivating and/or distributing machine is controlled and/or regulated by way of the data input into the computer (6), wherein a position transmitter (13) is provided to generate field co-ordinate signals for indicating the relative position of the vehicle (7, 8) on the field, wherein the control and/or regulating is effected in dependence on the actual position, **characterised in that** the equipment is switched on and off automatically when the tramline or the intended lane is departed from for an interruption in the operation for the purposes of topping up the hopper and is then re-started again to continue the operation.

## Revendications

1. Procédé de commande et/ou de régulation de machines de travail et/ou de distribution agricole selon lequel on enregistre en mémoire dans un calculateur, les données caractéristiques de la machine pour régler la machine selon l'emplacement et la surface,
et à l'aide des données introduites dans le calculateur (6) on commande et/ou on régule la machine de travail et/ou de distribution,
un générateur de position (13) générant des signaux de coordonnées de terrain pour indiquer la position relative du véhicule (7, 8) sur le champ, et en fonction de la position actuelle on commande et/ou on assure la régulation,
**caractérisé en ce que**
l'appareil se coupe et se remet automatiquement en marche lorsqu'on quitte la voie de passage ou la trace de passage pour une interruption du travail afin de remplir le réservoir et que l'on reprend de nouveau le travail.
